# EUROPEAN PATENT APPLICATION

(11) **EP 1 616 900 A1**
(43) Date of publication of application: **18.01.2006**
(21) Application number: 03777225.8
(22) Date of filing: 04.12.2003
(51) Int. Cl.: C08J 3/14

(54) **METHOD FOR PRODUCING FINE RESIN PARTICLES AND FINE RESIN PARTICLES**

(30) Priority: 23.04.2003 JP 2003118726; 23.04.2003 JP 2003118727; 23.04.2003 JP 2003118728; 23.04.2003 JP 2003118729
(71) Applicant: SEKISUI CHEMICAL CO., LTD., Osaka-shi, Osaka 530-8565 (JP)
(72) Inventor: TOYOSHIMA, Katsunori, c/o Sekisui Chemical Co. Ltd, Mishima-gun, Osaka 618-8589 (JP); MAENAKA, Hiroshi, c/o Sekisui Chemical Co., Ltd., Mishima-gun, Osaka 618-8589 (JP); TADA, Toshio, c/o Sekisui Chemical Co., Ltd., Mishima-gun, Osaka 618-8589 (JP); NISHIMURA, Yohei, c/o Sekisui Chemical Co., Ltd., Mishima-gun, Osaka 618-8589 (JP)
(74) Representative: Hart Davis, Jason
(86) International application number: PCT/JP2003/015506
(87) International publication number: WO 2004/094507

(57) **Abstract**

The present invention aims to provide a method for producing a resin fine particle by which a resin fine particle with high sphericity and even particle diameter can easily be obtained, a resin fine particle obtained by the method for producing a resin fine particle, a polyolefin type resin fine particle, a polyester type resin fine particle, and an acrylic resin fine particle.

The present invention is a method for producing a resin fine particle, which comprises a step 1 of heating and/or pressurizing a mixture of a resin and a fluid in which the resin is not dissolved in a normal temperature and normal pressure for making at least one component of the fluid supercritical state or subcritical state and a step 2 of decreasing the temperature of the fluid for releasing the pressure.

## Description

### TECHNICAL FIELD

The present invention relates to a method for producing a resin fine particle by which a resin fine particle with high sphericity and even particle diameter can easily be obtained, a resin fine particle obtained by the method for producing a resin fine particle, a polyolefin type resin fine particle, a polyester type resin fine particle, and an acrylic resin fine particle.

### BACKGROUND ART

Resin fine particles have widely been used in uses such as a sliding property-providing agent, a toner, a delustering agent for coating materials, an additive for light diffusion as well as a filler for chromatography and a carrier for immuno-diagnosis reagents. Particularly, in recent years, their uses as spacers of liquid crystal panels and substrate particles for conductive fine particles in fields relevant to IT have become popular. For example, resin fine particles comprising polyolefin type resins are excellent in thermoplasticity and easy and economical for disposal treatment and therefore, their uses in a wide range of fields are expected. Also, polyester type resin fine particles provide high strength and are economical, so that they are applied for various uses. If un-crosslinked polyester type resin fine particles are made available, excellent thermoplasticity and a variety of functions derived from remaining functional groups are expected and thus their uses will be expanded remarkably. Further, acrylic resin fine particles have been used widely in fields of such as adhesives and coating materials.

Resin fine particles to be used as substrate particles for spacers of liquid crystal panels and conductive fine particles in the fields relevant to IT are required to have good sphericity in a narrow particle diameter distribution.

Conventionally, as a method for producing resin fine particles, a physically crushing method using mills or others has been employed. According to the method, it is possible to easily obtain resin fine particles of many resins at a remarkably low cost. However, there is a problem that resin fine particles to be obtained by the method have amorphous in shapes and the particle diameter is large and to obtain particles in a narrow particle diameter distribution, classification work or the like is necessary and the strength of the resin fine particles to be obtained tends to be decreased.

Meanwhile, methods for producing resin fine particles by polymerization methods such as emulsion polymerization, dispersion polymerization, seed polymerization, suspension polymerization, and the like have been proposed. For example, Japanese Kokai Publication Hei-3-131603 proposes methods for controlling the particle diameter and particle size distribution of resin fine particles to be obtained by producing at first a monomer dispersion containing droplets with a desired size, introducing the dispersion into a polymerization tank, and carrying out polymerization under normal stirring condition. According to the methods, it is possible to produce resin fine particles with spherical shape in a narrow particle diameter distribution. However, there is a problem that these methods are applicable only for the resins which can be obtained by polymerization by the above-mentioned polymerization methods and additionally, it is required to extremely strictly control the polymerization conditions to produce resin fine particles with aimed particle diameter. Further, the resin fine particles produced by these methods inevitably contain surfactants, suspension stabilizers and so on, so that they cannot be used for the use fields where the surfactants and suspension stabilizers are problems.

### SUMMARY OF THE INVENTION

In view of the above state of the art, the present invention aims to provide a method for producing a resin fine particle by which a resin fine particle with high sphericity and even particle diameter can easily be obtained, a resin fine particle obtained by the method for producing a resin fine particle, a polyolefin type resin fine particle, a polyester type resin fine particle, and an acrylic resin fine particle.

The present invention provides a method for producing a resin fine particle, which comprises a step 1 of heating and/or pressurizing a mixture of a resin and a fluid in which the resin is not dissolved in a normal temperature and normal pressure for making at least one component of the fluid supercritical state or subcritical state and a step 2 of decreasing the temperature of the fluid for releasing the pressure.

The present invention provides a method for producing a resin fine particle, which comprises a step 1 of air-tightly sealing a mixture of a resin and a fluid in which the resin is not dissolved in a normal temperature and normal pressure in a pressure resistant container and heating the pressure resistant container for making at least one component of the fluid supercritical state or subcritical state and a step 2 of quenching the pressure resistant container for releasing the pressure.

In the method for producing a resin fine particle of the present invention, the above-mentioned fluid is preferable to contain a substance that is present in a liquid form at a normal temperature and normal pressure and also preferable to contain water and/or alcohol. Also, in the method for producing a resin fine particle of the present invention, recycled resins may be used as the above-mentioned resin.

The present invention also provides a resin fine particle produced by the method for producing a resin fine particle of the present invention. The resin fine particle of the present invention is preferable to have a particle diameter of 1 µm or smaller, CV value of the particle diameter of 5% or lower, and sphericity of 1.25 or lower.

The present invention also provides a polyolefin type resin fine particle comprising a polyolefin type resin having a weight average molecular weight 200,000 or higher. The weight average molecular weight of the above-mentioned polyolefin type resin is preferably 1,000,000 or higher. The present invention also provides a polyolefin type resin fine particle comprising a polyolefin type resin having an MI value of 10 or lower. The polyolefin type resin fine particle of the present invention is preferable to contain neither a surfactant nor a suspension stabilizer.

The present invention also provides a polyester type resin fine particle comprising an un-crosslinked polyester type resin. The polyester type resin fine particle of the present invention is preferable to contain neither a surfactant nor a suspension stabilizer.

The present invention also provides an acrylic resin fine particle containing neither a surfactant nor a suspension stabilizer. The acrylic resin fine particle of the present invention is preferable to contain neither a sulfonium salt nor a sulfate salt. The above-mentioned acrylic resin is preferable to be obtained by polymerizing poly(methyl methacrylate).

### Brief Description of the Drawings

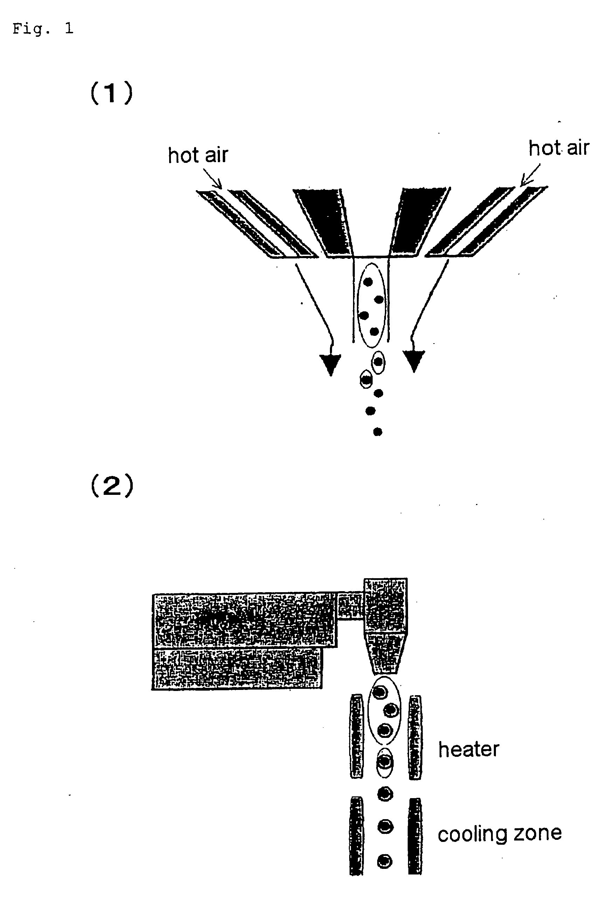

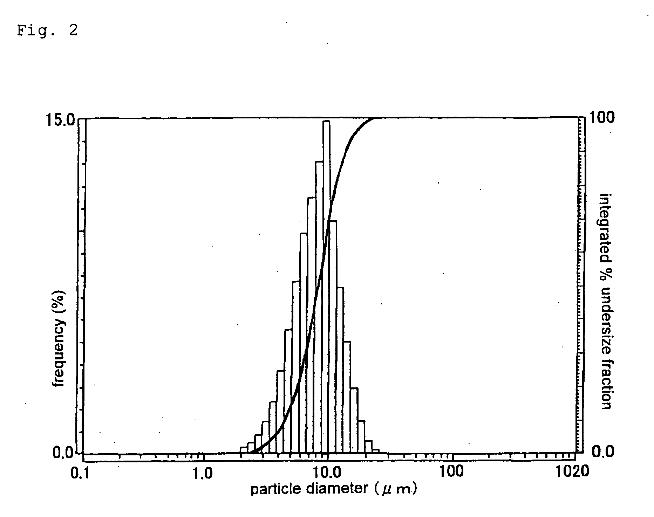

Fig. 1 is a schematic view showing one example of an apparatus for drying resin fine particle suspension in air by heat at the moment when the suspension is dripped. Fig. 2 is a drawing showing the particle diameter distribution of resin fine particles obtained in Example 1.

### DETAILED DESCRIPTION OF THE INVENTION

Hereinafter, the present invention will be described more in detail.

Inventors of the present invention have made intensive investigations and accordingly have found that a resin fine particle suspension comprising resin fine particles with high sphericity and even particle diameter suspended in a fluid can be obtained by heating and/or pressurizing a mixture of a resin and a fluid in which the resin is not dissolved at a normal temperature and normal pressure for making at least one component of the fluid supercritical state or subcritical state and thereafter, decreasing the temperature of the fluid and releasing the pressure and these findings have consequently led to completion of the present invention.

The fluid in supercritical state or subcritical state has both diffusivity which a gas has and solubility which a liquid has. Accordingly, even if it is a poor solvent to a resin at a normal temperature and normal pressure, the fluid can be a good solvent in supercritical or subcritical state and thus can dissolve and diffuse the resin therein. After that, when the temperature is decreased and the pressure is released, the fluid again becomes a poor solvent and therefore, the dissolved resin is precipitated. Since the resin is dispersed to a remarkably high extent in the fluid in the supercritical or subcritical state, it is supposed that the precipitated resin is extremely small and almost completely spherical owing to the surface tension.

In this description, the supercritical fluid means a fluid under conditions of critical pressure (hereinafter, sometimes referred to as Pc) or higher and critical temperature (hereinafter, sometimes referred to as Tc) or higher. Also, the subcritical fluid means a fluid under conditions other than supercritical state and satisfying 0.5 < P/Pc < 1.0 and 0.5 < T/Tc, or 0.5 <P/Pc and 0.5 < T/Tc < 1.0, wherein P and T respectively represent the pressure and the temperature at the time of reaction. The preferable ranges of the pressure and the temperature of the above-mentioned subcritical fluid are 0.6 < P/Pc < 1.0 and 0.6 < T/Tc or 0.6 < P/Pc and 0.6 < T/Tc <1.0. In this connection, in the case where the fluid is water, the ranges of the temperature and the pressure of the subcritical fluid are 0.5 < P/Pc < 1.0 and 0.5 < T/Tc, or 0.5 < P/Pc and 0.5 < T/Tc <1.0. In this case, the temperature is expressed by centigrade and when either Tc or T is a minus value by centigrade, the above-mentioned expression showing the subcritical state is not applied.

In the method for producing a resin fine particle of the present invention, at first a resin and a fluid in which the resin is not dissolved at a normal temperature and normal pressure are mixed.

The resin to be employed for the method for producing a resin fine particle of the present invention is not particularly limited and examples of the resin include polyester resins such as poly(ethylene terephthalate), polyphenylene ether resins, alicyclic hydrocarbon resins; thermoplastic polyimide resins; polyamide imide resins; polyester imide resins, polyolefin resins; polystyrene resins; polyamide resins; polyvinyl acetal resins; poly(vinyl alcohol) resins; poly(vinyl acetate) resins; poly(vinyl chloride) resins; poly(meth)acrylic acid ester resins such as poly(methyl methacrylate); polyether imide resins; thermoplastic polybenzimidazole resins and the like.

Examples also usable for the resin are curable resins such as epoxy resins; curable modified polyphenylene ether resins; curable polyimide resins; silicon resins; benzoxazine resins; melamine resins; urea resins; allyl resins; phenol resins; unsaturated polyester resins; bismaleimide triazine resins; alkyd resins; furan resins, polyurethane resins; and aniline resins. These curable resins may be un-crosslinked or crosslinked.

The resin to be used for the method for producing a resin fine particle of the present invention may include those which are recovered by recycling other than those produced newly. For example, in recent years, being lightweight and having high strength and high transparency, a large quantity of bottles comprising un-crosslinked poly(ethylene terephthalate) have been used mainly for beverages and along with the use, it becomes an urgent issue to advantageously use a large quantity of recovered used poly(ethylene terephthalate). However, the poly(ethylene terephthalate) recovered in form of PET bottles is mixed with various coloring elements and deteriorated by hydrolysis carried out at the time of pelletization and therefore, practical use of it has not been determined. At best, it is used for padding for toys and in the present situation, it is fired for thermal recycling. The method for producing a resin fine particle of the present invention is applicable to produce a resin fine particle even from such un-crosslinked poly(ethylene terephthalate) recovered by recycling and thus recycled resins can be used advantageously.

In the method for producing a resin fine particle of the present invention, to produce a resin fine particle, the shape of the above-mentioned resin is preferable to have a large specific surface area (the surface area per unit volume). The resin can be brought into contact with the fluid at a high efficiency and the treatment time can therefore be shortened by making the specific surface area high. The energy efficiency can be heightened and decomposition and deterioration of the resin can be suppressed by shortening the treatment time. A method for making the specific surface area high is not particularly limited and a method of using a powdered resin with a diameter of about 1 to 5 mm and a method of using a resin previously formed in films with 1 mm or thinner can be exemplified.

The above-mentioned fluid is not particularly limited if it does not dissolve the above-mentioned resin therein at a normal temperature and normal pressure, and it may be a substance that is present in a liquid form at a normal temperature and normal pressure such as water and organic solvents such as alcohols, and a substance that is present in a gas form at a normal temperature and normal pressure such as carbon dioxide, nitrogen, oxygen, helium, argon, and air and also their mixed fluids. It is preferable to include at least one of substances that are present in a liquid form at normal temperature and normal pressure. In the case where the fluid comprises only substances that are present in a gas form at normal temperature and normal pressure, it is sometimes required to keep extremely high pressure and temperature in order to dissolve the resin in fluid.

In the case where a mixed fluid is used as the above-mentioned fluid, it is sufficient that at least one component of the fluid composing the mixed fluid becomes the supercritical or subcritical state.

As the above-mentioned fluid being present in liquid form at a normal temperature and normal pressure, water and/or an alcohol are preferable. Water is a solvent easy to be used and cheap and economical and also preferable in terms of effects on the environments. Also, alcohol such as methanol is preferable because of the similar reasons. Further, if isopropanol, which is a secondary alcohol, is used, hydrolysis of hydrolyzable resins can be suppressed.

To the extent that a resin is not dissolved at a normal temperature and normal pressure, organic solvents may be used and examples are saturated, unsaturated, straight, branched, alicyclic saturated hydrocarbons such as hexane, heptane, isobutane, isopentane, neopentane, cyclohexane, and butene; aromatic hydrocarbon type organic solvents such as toluene, benzene, styrene, and xylene; ketone type organic solvents such as acetone, isobutyl methyl ketone, isopropyl methyl ketone, and methyl ethyl ketone; carboxylic acid type compounds such as isovaleric acid and acetic acid; ether type organic solvents such as diethyl ether, dibutyl ether, tetrahydrofuran, and dioxane; ester type organic solvents such as ethyl acetate and butyl acetate; amine type organic solvents such as hexamethylene diamine; acrylic type organic solvents such as methyl (meth)acrylate and ethyl (meth)acrylate; dimethyl sulfoxide, N,N-dimethylformamide, N,N-dimethylacetamide, N-methyl-2-pyrrolidone and the like. These organic solvents may be modified partially or completely by halogenation or the like.

The above-mentioned resins and fluids are properly selected in optimum combinations within a range satisfying the above specified conditions. For example, in the case where a resin is poly(ethylene terephthalate), methanol is preferable as a liquid fluid and in the case where a resin is poly(methyl methacrylate), water is preferable as a liquid fluid and in the case where a resin is a polyolefin resin, a mixed fluid of water and alcohol is preferable as a liquid fluid.

In the method for producing a resin fine particle of the present invention, a mixture of the above-mentioned resin and the fluid is heated and/or pressurized to make the fluid in supercritical or subcritical state. In the case where the above-mentioned fluid is a mixed fluid, it is sufficient that at least one component becomes in supercritical or subcritical state. For example, it is known that water becomes in supercritical state at a temperature of about 374°C or higher and a pressure of about 22 MPa or higher and methanol becomes in supercritical state at a temperature of about 240°C or higher and a pressure of about 8 MPa or higher.

Additionally, if the above-mentioned mixture is air-tightly sealed in a pressure resistant container, the supercritical or subcritical state can easily be attained by heating. The above-mentioned pressure resistant container is not particularly limited and conventional known ones can be used and an autoclave, for example, can be employed.

The supercritical or subcritical state is extremely highly active environment and chemical reaction is very actively promoted, so that if the resin is kept in the supercritical state for a long time, a reaction such as esterification and acetalization may be caused or decomposition reaction may be caused. Accordingly, it is preferable that the time when the resin is kept in the supercritical or subcritical state is short enough not to cause a reaction of the resin. For example, in the case of the combination of polyethylene terephthalate and methanol, it is preferable to be within 5 minutes at 250°C.

Further, in the supercritical or subcritical state, it is preferable to stir the above-mentioned mixture of the resin and the fluid. The resin is more evenly diffused in the fluid by stirring and applying shearing force and accordingly, the particle diameter of the resin fine particles to be obtained can be made more even. The above-mentioned stirring method is not particularly limited and conventionally known methods can be employed, for example, a method of using a stirring motor for an autoclave and a method of shaking a pressure resistant container in the supercritical or subcritical state after at least one hard ball (e.g. steel balls) stable in the supercritical or subcritical state are previously put in the pressure resistant container can be exemplified.

After being kept in the supercritical or subcritical state for a prescribed time, the above-mentioned fluid is preferable to be quickly decreased the temperature and released the pressure. As described above, if the resin is kept in the supercritical or subcritical state for a long time, the resin may possibly be reacted. After a prescribed time, while the air-tight state is kept as it is, the container is quenched to return to a normal temperature and normal pressure and consequently, the reaction of the resin can be prevented. The method for quenching is not particularly limited and includes, for example, a method in which the above-mentioned pressure resistant container may be air cooled or cooled with water.

Through the above-mentioned process, a suspension of the resin fine particles can be obtained. The resin fine particles in the obtained suspension have almost complete sphericity and a very narrow particle diameter distribution.

A method for recovering the resin fine particles from the above-mentioned resin fine particle suspension is not particularly limited and conventionally known methods can be employed. However, depending on the combination of a resin and a fluid, the resin fine particle suspension to be obtained seems to be sticky and in such as case, it is required to prevent the resin fine particles from sticking to one another at the time of recovering the resin fine particles. For example, a method for heat drying the resin fine particles in air by using a hot air or a heat source such as far-infrared rays while the above-mentioned resin fine particle suspension being dropped or a method for once carrying out washing with a non-polar solvent and then carrying out drying can be preferably exemplified. Fig. 1 shows one example of an apparatus for heat drying in air while the above-mentioned resin fine particle suspension being dropped.

The method for producing a resin fine particle of the present invention is capable of obtaining a suspension of resin fine particles with almost completely sphericity in a narrow particle diameter distribution by heating and/or pressurizing a mixture of a resin and a fluid in which the resin is not dissolved at a normal temperature and normal pressure for making at least one component of the fluid supercritical state or subcritical state and thereafter decreasing the temperature of the fluid and releasing the pressure. Also, use of the air-tightly sealed pressure resistant container in the present invention makes it possible to carry out a series of the steps only by controlling the temperature. Further, if the production conditions are arranged, thermal decomposition of the resin is scarcely caused and therefore, if a resin with a high molecular weight is used as a raw material, resin fine particles with a high molecular weight almost same as that of the resin can be obtained. Even if the molecular weight of the raw material resin is uneven, it may be possible to obtain resin fine particles with a high molecular weight in a narrow molecular weight distribution by carrying out an operation of removing resins with relatively low molecular weight which are dissolved in a fluid in the process of producing the supercritical or subcritical state.

The present invention also provides resin fine particles obtained by the method for a producing the resin fine particle of the present invention.

The average particle diameter of the resin fine particles of the present invention is not particularly limited, however it is preferable to be 1 µm or small. If it exceeds 1 µm, the resin fine particles tend to be agglomerated and dispersion stability cannot be maintained in some cases. The lower limit of the average particle diameter is not particularly limited, however it is preferable to be 50 nm or larger. If it is smaller than 50 nm, the handling property may possibly be deteriorated.

The resin fine particles of the present invention are preferable to have CV value of the particle diameter of 5% or lower. If the particle diameter is even to the extent that the CV value is 5% or lower, the resin fine particles of the present invention have good evenness in properties and are preferably usable for uses for spacers in fields relevant to IT, highly heat sensitive fillers, and uniform crystal nucleating agents. It is more preferably 3% or lower. The CV value of the particle diameter can be calculated according to the following expression:

CV value of particle diameter (%) = (σ_{D}/Dn)×100 Wherein σ_{D} represents the standard deviation of the particle diameter and Dn represents the number average particle diameter.

The resin fine particles of the present invention are preferable to have the sphericity of 1.25 or lower. If the sphericity is 1.25 or lower, for example, in the case where the particles are used for connection of electrodes while being made to be conductive fine particles by plating, the particles can give extremely high connection stability or in the case where the particles are used for spacers for producing gaps of liquid crystal substrates, the particles can give gaps with extremely high precision and in such a manner, the resin fine particles can be used extensively in a variety of spheres. It is more preferably 1.1 or smaller. The above-mentioned sphericity is a parameter showing the degree of the error (deviation) to the geometric sphere and the value is closer to 1, it means nearer to sphere. The above-mentioned sphericity can be measured by image analysis of an image photographed by a three-dimensional scanning method or the like using a computer or others. In the case where the three-dimensional scanning cannot be employed, a roundness measured by image analysis of the image photographed by a two-dimensional scanning method or the like using a computer or others may be a substituting value for the sphericity.

According to the method for producing a resin fine particle of the present invention, the spherical resin fine particles with an even particle diameter can be extremely easily obtained from almost all kinds of resins. Among them, even though it has been expected that polyolefin type resin fine particles with high molecular weights, polyester type resin fine particles comprising un-crosslinked polyester type resins, and acrylic type resin fine particles containing neither a surfactant nor a suspension stabilizer would be made available for various uses, they cannot be produced practically by conventional methods for producing.

The present invention also provides polyolefin type resin fine particles comprising a polyolefin type resin having a weight average molecular weight of 200,000 or more. If the weight average molecular weight of the polyolefin type resin is lower than 200,000, the obtained polyolefin type resin fine particles of the present invention cannot maintain solid shape or become sticky, and therefore, they cannot be used for an insulating filler and a crystal nucleating agent. It is preferable 800,000 or higher. In the case of using those with ultra high molecular weight, not lower than 1,000,000, high strength can be obtained and since bleed with a low molecular weight components scarcely takes place, various properties, e.g. suitability for biochemical use, can be provided.

Further, since no good solvent exists for the polyolefin type resin and its molecular weight measurement is extremely difficult, generally MI value is used in place of the molecular weight. In the case where the MI value is employed for expressing the molecular weight, the above-mentioned polyolefin type resin has the MI value of 10 or lower. The present invention also provides a polyolefin type resin fine particles comprising a polyolefin type resin having an MI value of 10 or lower. The MI value means the gram number of a thermoplastic resin extruded at a load of 1,260 g for 10 minutes through an orifice of 2.0955 mm at a temperature of 190°C.

Resin fine particles comprising a polyolefin type resin with such a high molecular weight, particularly having a particle diameter of 100 µm or smaller, cannot be produced practically by conventional methods, however according to the method for producing a resin fine particle of the present invention, those having an even particle diameter and high sphericity can be easily produced. Further, since the polyolefin type resin fine particles produced by the method for producing a resin fine particle of the present invention contain neither a surfactant nor a suspension stabilizer, they can be used preferably for biochemical uses such as a protein carrier.

The above-mentioned polyolefin type resin is not particularly limited and for example, low density polyethylene, high density polyethylene, polypropylene, polyisobutylene, polyethylene-polypropylene copolymers can be exemplified.

The particle diameter of the polyolefin type resin fine particles of the present invention is preferable to be 100 µm or smaller. If it exceeds 100 µm, they cannot be used for uses in the fields relevant to IT and diagnosis pharmaceutical fields. Especially, if the particle diameter is 1 µm or smaller, a property, dispersibility in water, which conventional polyolefin type resin fine particles have never been provided with, can be exhibited and therefore, applications of such particles to diagnosis reagents and completely new uses can be expected.

The polyolefin type resin fine particles of the present invention are preferable to have a CV value of the particle diameter of 5% or lower. If it exceeds 5%, the particle diameter becomes uneven and for example, in the case where the resin fine particles are made to be conductive fine particles by plating and used for connecting electrodes, the connection stability sometimes becomes insufficient. Also, if the particle diameter is even to the extent that the CV value is 5% or lower, the obtained polyolefin type resin fine particles of the present invention are provided with uniform properties such as melting temperature or the like and in the case where the particles are used, for example, for fillers, a sharp melting property that the fillers are swiftly melted in a specified temperature range can be provided.

The polyolefin type resin fine particles of the present invention have sphericity of 1.25 or lower. If the sphericity is 1.25 or lower, when the particles are made to be conductive fine particles by plating or the like and used for connecting electrodes, extremely high connection stability can be obtained and when the particles are used for spacers for producing gaps of liquid crystal substrates, the particles can give gaps with extremely high precision and in such a manner, the resin fine particles can be used extensively in a variety of spheres. It is more preferably 1.1 or lower.

The polyolefin type resin fine particles of the present invention can be used for a variety of uses such as a sliding property-providing agent, a toner, a delustering agent for coating materials, an additive for light diffusion, a blocking prevention agent for wrapping materials comprising low density polyethylene as well as an insulating filler, a crystal nucleating agent, a filler for chromatography, a carrier for immuno-diagnosis reagents and so forth. The polyolefin type resin fine particles of the present invention are also suitable as a filler to be mixed with polyolefin type resins. Generally, the polyolefin type resins are low in polarity and difficult to disperse a filler therein, however the polyolefin type resin fine particles of the present invention have good dispersibility to polyolefin type resins. In the case where the polyolefin type resin fine particles of the present invention are used as a crystal nucleating agent, the resin fine particles can improve the transparency of the polyolefin type resins. Further, since shrinkage is uniformly carried out at the time of molding, the resin fine particles can provide a molded body with excellent size stability and may be employed for a molded body for products in precision industries.

The present invention also provides polyester type resin fine particles comprising an un-crosslinked polyester type resin. Since the polyester type resin fine particles of the present invention comprises the un-crosslinked polyester type resin, the polyester type resin fine particles of the present invention have a clear glass transition temperature and melting point and are preferably usable for heat sensible fillers and crystal nucleating agents of crystalline polymers. Also, since an un-crosslinked polyester type resin contains a large quantity of remaining polar groups such as COOH and OH, these polar groups exist on the surface of the polyester type resin fine particles of the present invention. Accordingly the polyester type resin fine particles of the present invention have high affinity with pigments and therefore are preferable useful also as binder resins for coating materials and ink. Further, since these polar groups are easily reacted with compounds having amino groups, glycidyl groups, isocyanate groups or the like, these resin fine particles can easily carry out surface modification and provide various properties.

It has been practically impossible to produce polyester type resin fine particles comprising such an un-crosslinked polyester type resin by conventional production methods, however according to the method for producing a resin fine particle of the present invention can easily produce resin fine particles with a sufficiently small and even particle diameter and high sphericity. Also, the polyester type resin fine particles produced by the method for producing a resin fine particle of the present invention contain neither a surfactant nor a suspension stabilizer, and they can be therefore used preferably for biochemical uses such as a protein carrier.

The above-mentioned polyester resin can be produced by condensation polymerization of a dicarboxylic acid and a diol.

Examples of the above-mentioned dicarboxylic acid are o-phthalic acid, terephthalic acid, isophthalic acid, succinic acid, adipic acid, sebacic acid, azelaic acid, octylsuccinic acid, cyclohexanedicarboxylic acid, naphthalenedicarboxylic acid, fumaric acid, maleic acid, itaconic acid, decamethylenecarboxylic acid, and their anhydrides and lower alkyl esters.

Examples of the above-mentioned diol are aliphatic diols such as ethylene glycol, 1,3-propanediol, 1,4-butanediol, diethylene glycol, 1,5-pentanediol, 1,6-hexanediol, dipropylene glycol, triethylene glycol, tetraethylene glycol, 1,2-propane diol, 1,3-butanediol, 2,3-butanediol, neopentyl glycol (2,2-dimethylpropane-1,3-diol), 1,2-hexanediol, 2,5-hexanediol, 2-methyl-2,4-pentanediol, 3-methyl-1,3-pentanediol, and 2-ethyl-1,3-hexanediol; 2,2-bis(4-hydroxycyclohexyl)propane, an alkylene oxide addition product of 2,2-bis(4-hydroxycyclohexyl)propane; and alicyclic diols such as 1,4-cyclohexane diol, and 1,4-cyclohexane dimethanol.

At the time of producing the above-mentioned polyester resin, the reaction may be carried out in the reaction system additionally containing a polyfunctional monomer such as divinylbenzene, divinylbiphenyl, divinylnaphthalene, polyethylene glycol di(meth)acrylate, 1,6-hexanediol di(meth)acrylate, neopentyl glycol di(meth)acrylate, trimethylolpropane tri(meth)acrylate, tetramethylolmethane tri(meth)acrylate, tetramethylolpropane tetra(meth)acrylate, diallyl phthalate and its isomers, and triallyl isocyanurate and its derivatives. Addition of such a polyfunctional monomer makes it possible to change the physical properties such as strength and the various properties such as thermoplasticity by carrying out crosslinking reaction based on the necessity after production of the polyester type resin fine particles of the present invention. These polyfunctional monomers may be used alone and two or more of them may be used in combination.

The average particle diameter of the polyester type resin fine particles of the present invention is preferably 1 µm or smaller. If it exceeds 1 µm, the resin fine particles tend to be agglomerated and dispersion stability cannot be maintained in some cases. The lower limit of the average particle diameter is not particularly limited, however it is preferable to be 50 nm or larger. If it is smaller than 50 nm, the handling property may possibly be deteriorated.

The polyester type resin fine particles of the present invention are preferable to have CV value of the particle diameter of 5% or lower. If the particle diameter is even to the extent that the CV value is 5% or lower, the polyester type resin fine particles of the present invention have good evenness in properties and are preferably usable for uses for spacers in fields relevant to IT, highly heat sensitive fillers, and uniform crystal nucleating agents. It is more preferably 3% or lower.

The polyester type resin fine particles of the present invention are preferable to have the sphericity of 1.25 or lower. If the sphericity is 1.25 or lower, in the case where the particles are used for connecting electrodes while being made to be conductive fine particles by plating, the particles can give extremely high connection stability or in the case where the particles are used for spacers for producing gaps of liquid crystal substrates, the particles can give gaps with extremely high precision and in such a manner, the resin fine particles can be used extensively in a variety of spheres. It is more preferably 1.1 or lower.

Since the polyester type resin fine particles of the present invention comprises the un-crosslinked polyester type resin, the particles have excellent thermoplasticity and various properties derived from remaining functional groups. Further, since the particle diameter is small and extremely even, it is expected that the particles can be used in a variety of uses. In the case where the polyfunctional polymerizable monomer is contained, based on the necessity, the dynamic property such as strength and the thermoplasticity can be changed. The polyester type resin fine particles of the present invention can be used for a variety of uses such as a seed particle for seed polymerization, a coating material, a sliding property-providing agent, a toner, an additive for light diffusion, an insulating filler, a crystal nucleating agent, a filler for chromatography, a carrier for immuno-diagnosis reagents and the like.

The present invention also provides acrylic resin fine particles containing neither a surfactant nor a suspension stabilizer. Containing neither a surfactant nor a suspension stabilizer, the acrylic resin fine particles of the present invention can be used for ion-free uses and in the case where the particles are used for coating materials or the like, they exhibit extremely high weathering resistance and water-proofness.

As the above-mentioned surfactant, those which are employed generally in emulsion polymerization or the like can be exemplified and practical examples are anionic surfactants such as fatty acid salts, sulfuric acid ester salts of higher alcohol, sulfuric acid ester salts of liquid aliphatic oils, sulfuric acid salts of aliphatic amines and aliphatic amides, phosphoric acid esters of aliphatic alcohols, sulfonic acid salts of dibasic aliphatic esters, and alkylallylsulfonic acid salts; cationic surfactants such as primary amine salts, secondary amine salts, ternary amine salts, quaternary ammonium salts, and pyridinium salts; and nonionic surfactants such as polyoxyethylene alkyl ethers, oxyethylene alkyl phenyl ethers, polyoxyethylene alkyl esters.

As the above-mentioned suspension stabilizer, those which are employed generally in emulsion polymerization or the like can be exemplified and practical examples are water soluble polymer type suspension stabilizers such as poly(vinyl alcohol), partially saponified poly(vinyl alcohol), poly(acrylic acid), poly(methacrylic acid), polymethacrylamide, gelatin, tragacanth, methyl cellulose, and starch; and hardly soluble inorganic salt type suspension stabilizers such as barium sulfate, calcium sulfate, barium carbonate, calcium carbonate, magnesium carbonate, calcium phosphate, and aluminum hydroxide.

Particularly, since most of the surfactants and suspension stabilizers to be employed presently for emulsion polymerization or the like are sulfonium salts and sulfate salts, the acrylic resin fine particles of the present invention are preferable to contain neither the sulfonium salts nor sulfate salts.

In a conventional method for producing acrylic resin fine particles by emulsion polymerization or the like, it is required to use a surfactant and a suspension stabilizer to stably disperse monomers in a medium and therefore, the acrylic resin fine particles to be obtained inevitably contain the surfactant and the suspension stabilizer. If the acrylic resin fine particles containing the surfactant and the suspension stabilizer are used for coating materials and the like, they may possibly adversely affect weathering resistance and waterproofness of the coating materials owing to the hydrophilicity of the surfactant and the suspension stabilizer. Further, they cannot be used for uses required to be ion-less such as a binder for specific use and are limited in the uses. It is required to carry out complicated work of such as repeat washing with a large quantity of water to remove the surfactant and the suspension stabilizer from the acrylic resin fine particles and even if such a work is carried out, it is difficult to completely remove the surfactant. Further, in the case of emulsion polymerization or the like, the suspending know-how of monomers in the emulsion polymerization is very difficult and the types of surfactants, suspension stabilizers, monomers and initiators usable for the emulsion polymerization or the like are considerably limited and there is also a problem that the fine particles cannot be produced in the case where only the order of the process differs. In recent years, as a method for producing a resin fine particle, a soap-free polymerization method using neither a surfactant nor a suspension stabilizer has been proposed. However, since this method uses a monomer having a surface activation effect in place of the surfactant and the suspension stabilizer and consequently, the acrylic monomer itself is a sulfonic type surfactant, the method is not capable of basically solving the problem attributed to the surfactant and the suspension stabilizer. Further, since it is required to use a monomer copolymerizable with such a monomer having surface activation effect, the composition of the acrylic resin is also limited. As described, the acrylic resin fine particles containing neither a surfactant nor a suspension stabilizer are actually impossible to be produced by a conventional method, however according to the method for producing a resin fine particle of the present invention, resin fine particles with a sufficiently small and even particle diameter and high sphericity can be easily produced.

The acrylic resin in this description means resins obtained by polymerization of acrylic acid and its derivatives and includes polymers and copolymers of acrylic acid and its esters, acrylamide, acrylonitrile, methacrylic acid and its esters. The above-mentioned acrylic resin is not particularly limited, however those obtained by polymerization of poly(methyl methacrylate) are preferable. The acrylic resins thus obtained are excellent in weathering resistance and can be also used, for example, as a physical property modifying agent for resin films for outdoor uses and also, since they contain polar groups, the acrylic resins are excellent in dispersibility for a variety of pigments and coating materials and can provide an adhesive property or the like.

The average particle diameter of the acrylic resin fine particles of the present invention is preferable to be 1 µm or smaller. If it exceeds 1 µm, the resin fine particles tend to be agglomerated and dispersion stability cannot be maintained in some cases. The lower limit of the average particle diameter is not particularly limited, however it is preferable to be 50 nm or larger. If it is smaller than 50 nm, the handling property may possibly be deteriorated.

The acrylic resin fine particles of the present invention are preferable to have CV value of the particle diameter of 5% or lower. If the particle diameter is even to the extent that the CV value is 5% or lower, the acrylic resin fine particles of the present invention have good evenness in properties and are preferably usable for uses for spacers in fields relevant to IT, highly heat sensitive fillers, and uniform crystal nucleating agents and the like. It is more preferably 3% or lower.

The acrylic resin fine particles of the present invention are preferable to have the sphericity of 1.25 or lower. If the sphericity is 1.25 or lower, in the case where the particles are used for connection of electrodes while being made to be conductive fine particles by plating, the particles can give extremely high connection stability or in the case where the particles are used for spacers for producing gaps of liquid crystal substrates, the particles can give gaps with extremely high precision and in such a manner, the resin fine particles can be used extensively in a variety of spheres. It is more preferably 1.1 or smaller.

The acrylic resin fine particles of the present invention contain no surfactant and are soap-free and have a remarkably even particle diameter and molecular weight. The acrylic resin fine particles of the present invention can be used for a variety of uses such as a seed particle for seed polymerization, an adhesive, a coating material, a sliding property-providing agent, a toner, an additive for light diffusion, an insulating filler, a crystal nucleating agent, a filler for chromatography, a carrier for immuno-diagnosis reagents and the like. Especially in the case of using the particles for coating materials for outdoor use, the weathering resistance and coating strength are made to be remarkably excellent.

### BEST MODES FOR CARRYING OUT THE INVENTION

Hereinafter, the invention will be described more in detail with reference to Examples, however the invention should not be limited to these Examples.

### (Example 1)

4 g of methanol and 0.2 g of pellet type polyethylene terephthalate with a diameter of about 3 mm were air-tightly sealed in a pressure resistant container with an inner capacity of 10 mL. A ball made of SUS was previously put in the pressure resistant container. The pressure resistant container was shaken to mix the methanol and polyethylene terephthalate and heated to 250°C in an oil bath to make the methanol in the supercritical state. In this state, the pressure resistant container was shaken and quenched after 5 minutes to return the content to be at a normal temperature and normal pressure. Consequently, a resin fine particle suspension in which fine particles of the polyethylene terephthalate were suspended in methanol was obtained.

The resin fine particles in the obtained resin fine particle suspension were observed to find that the particles had almost completely spherical and an average particle diameter of 8.6 µm. The particle diameter distribution of the obtained resin fine particles was shown in Fig. 2.

### (Example 2)

4 g of water and 0.2 g of pellet type poly(methyl methacrylate) with a diameter of about 3 mm were air-tightly sealed in a pressure resistant container with an inner capacity of 10 mL. A ball made of SUS was previously put in the pressure resistant container. The pressure resistant container was shaken to mix the water and poly(methyl methacrylate) and heated to 400°C in a sand bath to make the water in the supercritical state. In this state, the pressure resistant container was quenched after 5 minutes to return the content to be at a normal temperature and normal pressure. Consequently, a resin fine particle suspension in which fine particles of the poly(methyl methacrylate) were suspended in the water was obtained.

### (Example 3)

0.2 g of each polyolefin type resin and 4 g of each fluid shown in Table 1 were air-tightly sealed in a pressure resistant container with an inner capacity of 10 mL. A ball made of SUS was previously put in the pressure resistant container. The pressure resistant container was shaken to mix the polyolefin type resin and the fluid and heated in an oil bath until the pressure and the temperature became as shown in Table 1. In this state, the pressure resistant container was shaken and quenched after 5 minutes to return the content to be at a normal temperature and normal pressure. Consequently, a resin fine particle suspension in which the polyolefin type fine particles were suspended in the fluid was obtained. The suspension was sufficiently washed and finally vacuum-dried to obtain polyolefin type resin fine particles.

The obtained polyolefin type resin fine particles were subjected to measurement of average particle diameter, CV value of the particle diameter, and roundness by the following methods.

The results were shown in Table 1.

### (Measurement of the particle diameter and CV value of the particle diameter)

The particle diameter and the particle diameter distribution were measured in a dynamic light scattering mode by ELS 800 (manufactured by Otsuka Electronics Co., Ltd.) and the CV value of the particle diameter was calculated from the measured values.

### (Measurement of the roundness)

Each resin fine particle suspension was dropped on a sample stand of a scanning electron microscope (S-3500N, manufactured by Hitachi, Ltd.) and dried in reduced pressure. After drying, gold was deposited on the surface of the resin fine particles by a vapor deposition apparatus and then the resin fine particles were photographed by an electron microscope. The obtained electron microscopic photograph was image-analyzed by Image pro. (manufactured by Media Cybernetic) to compute the roundness of resin fine particles.

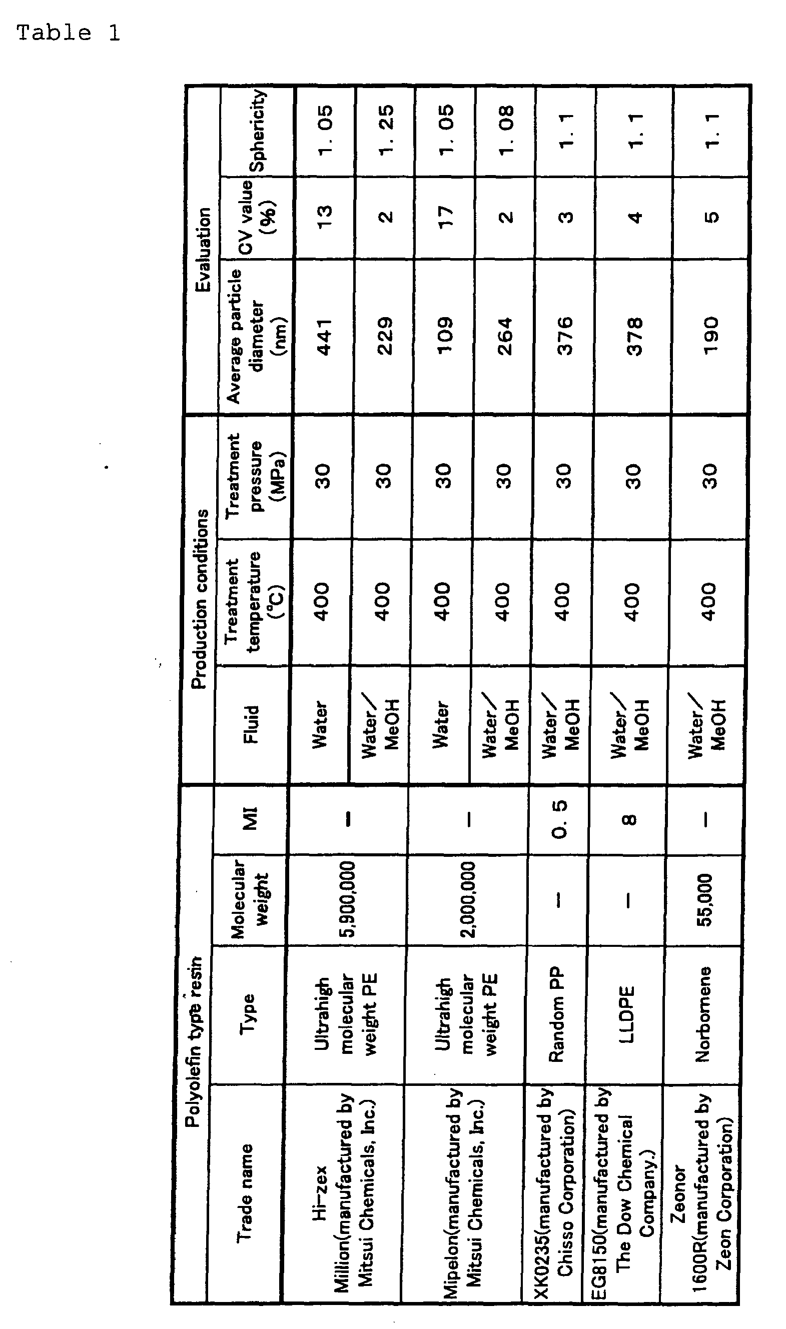

### (Example 4)

0.2 g of recovered used polyethylene terephthalate bottle and as a fluid, 4 g of an aqueous 10% methanol solution were air-tightly sealed in a pressure resistant container with an inner capacity of 10 mL. A ball made of SUS was previously put in the pressure resistant container. The pressure resistant container was shaken to mix the polyester type resin and a liquid fluid and then heated to 400°C in an oil bath. The pressure at this time was about 30 MPa. In this state, the pressure resistant container was shaken and quenched after 5 minutes to return the content to be at a normal temperature and normal pressure. Consequently, a resin fine particle suspension in which the un-crosslinked polyester type resin fine particles were suspended in the fluid was obtained. The suspension was sufficiently washed and finally vacuum-dried to obtain polyester type resin fine particles.

The obtained polyester type resin fine particles were subjected to the measurement of average particle diameter and particle diameter distribution in a dynamic light scattering mode by ELS 800 (manufactured by Otsuka Electronics Co., Ltd.) to find that the average particle diameter was about 500 nm and the CV value of the particle diameter was 2%.

Also, the resin fine particle suspension was dropped on a sample stand of a scanning electron microscope (S-3500N, manufactured by Hitachi, Ltd.) and dried in reduced pressure. After drying, gold was deposited on the surface of the resin fine particles by a vapor deposition apparatus and then the resin fine particles were photographed by an electron microscope. The obtained electron microscopic photograph was image-analyzed by Image pro. (manufactured by Media Cybernetic) for computation of the roundness of resin fine particles to find that the roundness was 1.05.

Further, measurement was carried out by a method according to JIS K7121 under a condition of heating speed at 10°C/minute using a differential scanning calorimeter (DSC-6200R, manufactured by Seiko Instruments Inc.) to find that a clear glass transition temperature was 74°C and a melting point was 255°C.

### (Example 5)

0.2 g of an acrylic resin (Sumipex, manufactured by Sumitomo Chemical Co., Ltd.) and as a liquid fluid, 4 g of an aqueous 10% methanol solution were air-tightly sealed in a pressure resistant container with an inner capacity of 10 mL. A ball made of SUS was previously put in the pressure resistant container. The pressure resistant container was shaken to mix the acrylic resin and a liquid fluid and then heated to 400°C in an oil bath. The pressure at this time was about 30 MPa. In this state, the pressure resistant container was shaken and quenched after 5 minutes to return the content to be at a normal temperature and normal pressure. Consequently, a resin fine particle suspension in which the acrylic resin fine particles were suspended in the fluid was obtained. The suspension was vacuum-dried to obtain acrylic resin fine particles.

### (Comparative Example 1)

379.5 mL of water containing 1.5 g of ammonium persulfate and 300 mL of methacrylic acid were put in a four-neck flask with a capacity of 2 L and equipped with a stirrer, a dry distillation condenser, a thermometer, and a nitrogen introduction apparatus and further 6 g of polyoxyethylene nonyl phenyl ether (a nonionic surfactant) and 15 g of lauryl sulfonic acid salt (a cationic surfactant) were added. After the air in the reaction vessel was sufficiently replaced with nitrogen and under stirring condition, polymerization was carried out at 70°C for 6 hours to obtain fine particles in an emulsion state. The suspension was sufficiently washed and finally vacuum-dried to obtain acrylic resin fine particles.

### (Evaluation)

The acrylic resin fine particles obtained by Example 5 and Comparative Example 1 were subjected to the measurement of average particle diameter, CV value of the particle diameter, roundness, and existence of surfactants by the following methods.

The results were shown in Table 2.

### (Measurement of the particle diameter and CV value of the particle diameter)

The particle diameter and the particle diameter distribution were measured in a dynamic light scattering mode by ELS 800 (manufactured by Otsuka Electronics Co., Ltd.) and the CV value of the particle diameter was calculated from the measured values.

### (Measurement of the roundness)

Each resin fine particle suspension was dropped on a sample stand of a scanning electron microscope (S-3500N, manufactured by Hitachi, Ltd.) and dried in reduced pressure. After drying, gold was deposited on the surface of the resin fine particles by a vapor deposition apparatus and then the resin fine particles were photographed by an electron microscope. The obtained electron microscopic photograph was image-analyzed by Image pro. (manufactured by Media Cybernetic) to compute the roundness of resin fine particles.

### (Measurement of existence of surfactants)

The acrylic resin fine particles were subjected to fluorescent x-ray analysis to investigate whether sulfur of sulfonium ion was detected or not.

0.01 g of the acrylic resin fine particles was suspended in 10 mL of water and extracted at 23°C for 24 hours in air-tightly sealed state. The extracted solution was dialyzed at 23°C for 24 hours by using a dialysis membrane and centrifuged and the resulting supernatant solution was subjected to ICP analysis to investigate whether sulfur of sulfonium salt was detected or not.

**Table 2**

| | | Example 5 | Comparative Example 1 |
|---|---|---|---|
| Average particle diameter(nm) | | 800 | 1000 |
| CV value of particle diameter(%) | | 4 | 4 |
| Roundness | | 1.05 | 1.10 |
| Occurrence of detection of sulfur | Resin fine particles | none | detected |
| | Extracted solution | none | detected |

### INDUSTRIAL APPLICABILITY

Accordingly, the present invention provides a method for producing a resin fine particle by which a resin fine particle with high sphericity and even particle diameter can easily be obtained, a resin fine particle obtained by the method for producing a resin fine particle, a polyolefin type resin fine particle, a polyester type resin fine particle, and an acrylic resin fine particle.

## Claims

1. A method for producing a resin fine particle,
which comprises a step 1 of heating and/or pressurizing a mixture of a resin and a fluid in which the resin is not dissolved in a normal temperature and normal pressure for making at least one component of the fluid supercritical state or subcritical state and a step 2 of decreasing the temperature of the fluid for releasing the pressure.

2. A method for producing a resin fine particle,
which comprises a step 1 of air-tightly sealing a mixture of a resin and a fluid in which the resin is not dissolved in a normal temperature and normal pressure in a pressure resistant container and heating the pressure resistant container for making at least one component of the fluid supercritical state or subcritical state and a step 2 of quenching the pressure resistant container for releasing the pressure.

3. The method for producing a resin fine particle according to Claim 1 or 2,
wherein the fluid contains a substance that is present in a liquid form at a normal temperature and normal pressure.

4. The method for producing a resin fine particle according to Claim 1 or 2,
wherein the fluid contains water and/or alcohol.

5. The method for producing a resin fine particle according to Claim 1, 2, 3 or 4,
wherein the resin is a recycled one.

6. A resin fine particle,
which is obtained by the method for producing a resin fine particle according to Claim 1, 2, 3, 4, or 5.

7. The resin fine particle according to Claim 6,
wherein the particle diameter is 1 µm or smaller.

8. The resin fine particle according to Claim 6 or 7,
wherein the CV value of the particle diameter is 5% or lower.

9. The resin fine particle according to Claim 6, 7, or 8,
wherein the sphericity is 1.25 or lower.

10. A polyolefin resin fine particle
which comprises a polyolefin resin having a weight average molecular weight of 200,000 or higher.

11. The polyolefin resin fine particle according to Claim 10,
wherein the weight average molecular weight of the polyolefin resin is 1,000,000 or higher.

12. A polyolefin resin fine particle,
which comprises a polyolefin resin having an MI value of 10 or lower.

13. The polyolefin resin fine particle according to Claim 10, 11, or 12,
wherein the polyolefin resin contains neither a surfactant nor a suspension stabilizer.

14. A polyester resin fine particle,
which comprises an un-crosslinked polyester resin.

15. The polyester resin fine particle according to Claim 14,
wherein the polyester resin contains neither a surfactant nor a suspension stabilizer.

16. An acrylic resin fine particle,
which contains neither a surfactant nor a suspension stabilizer.

17. The acrylic fine particle according to Claim 16,
which contains neither a sulfonium salt nor a sulfate acid salt.

18. The acrylic resin fine particle according to Claim 16 or 17,
wherein the acrylic resin is obtained by polymerizing poly(methyl methacrylate).
